# EUROPEAN PATENT SPECIFICATION

(11) **EP 3 550 753 B1**
(45) Date of publication and mention of the grant of the patent: **25.11.2026**
(21) Application number: 18745317.0
(22) Date of filing: 19.01.2018
(51) Int. Cl.: H04L 1/00, H04L 1/1812, H04L 1/1829, H04L 1/1867, H04L 1/18, H04L 1/16

(54) **METHOD FOR SENDING AND RECEIVING FEEDBACK INFORMATION, ACCESS NETWORK DEVICE AND TERMINAL DEVICE**
VERFAHREN ZUM SENDEN UND EMPFANGEN VON FEEDBACKINFORMATIONEN, ZUGANGSNETZWERKVORRICHTUNG UND ENDGERÄTEVORRICHTUNG
PROCÉDÉ D'ENVOI ET DE RÉCEPTION D'INFORMATIONS DE RÉTROACTION, DISPOSITIF DE RÉSEAU D'ACCÈS ET DISPOSITIF TERMINAL

(30) Priority: 25.01.2017 CN 201710062802
(43) Date of publication of application: 09.10.2019
(73) Proprietor: Huawei Technologies Co., Ltd., Longgang District Shenzhen, Guangdong 518129 (CN)
(72) Inventor: GUAN, Lei, Shenzhen Guangdong 518129 (CN)
(74) Representative: Pfenning, Meinig & Partner mbB
(86) International application number: PCT/CN2018/073384
(87) International publication number: WO 2018/137563

(56) References cited:
- WO-A1-2010/115295
- CN-A- 102 255 712
- CN-A- 103 918 207
- CN-A- 104 283 651
- CN-A- 104 301 077
- US-A1- 2016 205 679
- SAMSUNG: "Discussion on partial retransmission for eMBB", vol. RAN WG1, no. Spokane, USA; 20170116 - 20170120, 16 January 2017 (2017-01-16), XP051208475, Retrieved from the Internet <URL:http://www.3gpp.org/ftp/Meetings_3GPP_SYNC/RAN1/Docs/> [retrieved on 20170116]
- LG ELECTRONICS: "Discussion on multiplexing of eMBB and URLLC", vol. RAN WG1, no. Spokane, USA; 20170116 - 20170120, 10 January 2017 (2017-01-10), XP051202934, Retrieved from the Internet <URL:http://www.3gpp.org/ftp/tsg_ran/WG1_RL1/TSGR1_AH/NR_AH_1701/Docs/> [retrieved on 20170110]
- SAMSUNG: "Summary of e-mail discussions on multiplexing eMBB and URLLC in DL", vol. RAN WG1, no. Spokane, USA; 20170116 - 20170120, 10 January 2017 (2017-01-10), XP051203264, Retrieved from the Internet <URL:http://www.3gpp.org/ftp/tsg_ran/WG1_RL1/TSGR1_AH/NR_AH_1701/Docs/> [retrieved on 20170110]

## Description

### TECHNICAL FIELD

This application relates to the information transmission field, and more specifically, to a feedback information sending method, a feedback information receiving method, an access network device, and a terminal device.

### BACKGROUND

In a current long term evolution (Long Term Evolution, LTE) system, both hybrid automatic repeat request (Hybrid Automatic Repeat Request, HARQ) feedback and information retransmission are specific to a transport block (Transport Block, TB). For example, an access network device sends a TB to a terminal device, and the terminal device feeds back an acknowledgement (ACKnowledge, ACK) bit to the access network device only after the terminal device successfully decodes all code blocks (Code Block, CB) in the received TB. However, the terminal device feeds back a negative acknowledgement (NACKnowledge, NACK) bit to the access network device for the entire TB provided that there is one unsuccessfully decoded CB. Correspondingly, after receiving the NACK feedback sent by the terminal device, because the access network device is unclear about a specific CB that is successfully decoded by the terminal device and a specific CB that fails to be decoded by the terminal device, the access network device subsequently performs HARQ retransmission on all the CBs in the entire TB even if the terminal device correctly decodes most of the CBs.

Apparently, in an information transmission process, the terminal device gives a feedback on the entire TB to the access network device, and the access
network device retransmits the TB. Consequently, transmission efficiency of a system significantly decreases. SAMSUNG, "Discussion on partial retransmission for eMBB", vol. RAN WG1, no. Spokane, USA; 20170116-20170120, (20170116), 3GPP DRAFT; R1-1700959, describes retransmitting a part of eMBB data expected to be broken without waiting for UE HARQ ACK feedback. LG ELECTRONICS, "Discussion on multiplexing of eMBB and URLLC", vol. RAN WG1, no. Spokane, USA; 20170116 - 20170120, (20170110), 3GPP DRAFT; R1-1700512, proposes considering the eMBB data recovery process, which (re)transmits eMBB data punctured or interfered by URLLC transmission. Retransmission of transport blocks may be scheduled before receiving ACK/NACKs. SAMSUNG, "Summary of e-mail discussions on multiplexing eMBB and URLLC in DL", vol. RAN WG1, no. Spokane, USA; 20170116 - 20170120, (20170110), 3GPP DRAFT; R1-1700972 summarizes e-mail discussion on multiplexing of eMBB and URLLC in DL.

### SUMMARY

This current invention provides a feedback information sending method, a feedback information receiving method, a terminal device and an access network device according to the independent claims, to improve transmission efficiency of a system. Particular embodiments of the invention are specified in the dependent claims. Subsequently described aspects and embodiments are to be considered embodiments of the current invention if, and only if, they fall within the scope of any of the independent claims.

### DESCRIPTION OF DRAWINGS

FIG. 1 is a schematic interaction diagram of a feedback information sending method 100 according to an embodiment of this application;
FIG. 2 is a schematic diagram of sending feedback information according to an embodiment of this application;
FIG. 3 is a schematic interaction diagram of a feedback information sending method 200 according to another embodiment of this application;
FIG. 4 shows an example of sending feedback information according to examples of this application;
FIG. 5 shows another example of sending feedback information according to the invention;
FIG. 6 shows still another example of sending feedback information according to examples of this application;
FIG. 7 shows yet another example of sending feedback information according to examples of this application;
FIG. 8 is a schematic block diagram of a terminal device 300 according to an embodiment of this application;
FIG. 9 is a schematic block diagram of an access network device 400 according to an embodiment of this application;
FIG. 10 is a schematic block diagram of a terminal device 500 according to an embodiment of this application;
FIG. 11 is a schematic block diagram of an access network device 600 according to an embodiment of this application;
FIG. 12 is a schematic structural diagram of a terminal device 700 according to an embodiment of this application;
FIG. 13 is a schematic structural diagram of an access network device 800 according to an embodiment of this application;
FIG. 14 is a schematic structural diagram of a terminal device 900 according to an embodiment of this application; and
FIG. 15 is a schematic structural diagram of an access network device 1000 according to an embodiment of this application.

### DESCRIPTION OF EMBODIMENTS

The following describes technical solutions of this application with reference to accompanying drawings.

First, related concepts in the embodiments of this application are briefly explained.

Transport block TB and code block CB: In the prior art, one TB is split into a plurality of CBs for independent channel coding and decoding. For example, for a Turbo code, a maximum quantity of bits of one CB is 6144. To be specific, if a quantity of bits of a TB exceeds 6144, the TB needs to be split into a plurality of CBs for independent channel coding and decoding. For a low-density parity-check code (Low-Density Parity-Check Code, LDPC), a maximum quantity of bits of one CB is approximately 2000. Likewise, if a quantity of bits of a TB exceeds 2000, the TB needs to be split into more CBs for independent coding and decoding.

In addition, each CB has an independent check function. The Turbo code is used as an example. Cyclic redundancy check (Cyclic Redundancy Check, CRC) is performed on each CB before coding. Correspondingly, after decoding a CB, the UE can determine, through CRC check, whether the CB is correctly decoded.

An access network device in the embodiments of this application may be an evolved NodeB (Evolutional NodeB, eNB or eNodeB for short), a macro base station, a micro base station (also referred to as a "small cell"), a pico base station, an access point (Access Point, AP), a transmission point (Transmission Point, TP), a radio network controller, or the like in a long term evolution (Long Term Evolution, LTE) system, or may be a gNodeB in a new radio (New Radio, NR) system, or the like.

A terminal device may also be referred to as user equipment (User Equipment, UE), a mobile station (Mobile Station, MS), a mobile terminal (Mobile Terminal), or the like. The terminal device may communicate with one or more core networks by using a radio access network (Radio Access Network, RAN). For example, the terminal device may be a mobile phone (also referred to as a "cellular" phone) or a computer having a mobile terminal, or may be a portable mobile apparatus, a pocket-sized mobile apparatus, a handheld mobile apparatus, a computer built-in mobile apparatus, an in-vehicle mobile apparatus, or a terminal device in a future communications system (for example, 5G).

In the existing LTE system, both hybrid automatic repeat request (Hybrid Automatic Repeat Request, HARQ) feedback and information retransmission are performed in a form of transport blocks (Transport Block, TB). For example, an access network device sends a TB to a terminal device, and the terminal device feeds back an acknowledgement (ACKnowledge, ACK) bit to the access network device only after the terminal device successfully decodes all code blocks (Code Block, CB) in the received TB. However, the terminal device feeds back a negative acknowledgement (NACKnowledge, NACK) bit to the access network device for the entire TB provided that there is one unsuccessfully decoded CB. Correspondingly, after receiving the NACK feedback sent by the terminal device, because the access network device is unclear about a specific CB that is successfully decoded by the terminal device and a specific CB that fails to be decoded by the terminal device, the access network device subsequently performs HARQ retransmission on all the CBs in the entire TB even if the terminal device correctly decodes most of the CBs.

In a future communications technology (for example, 5G), two important technical requirements for enhanced mobile broadband (Enhanced Mobile Broadband, eMBB) and ultra-reliable and low latency communications (Ultra Reliable Low Latency Communications, URLLC) are introduced. For the eMBB, data transmission in 5G reaches a higher rate compared with 4G. Therefore, a larger TB may be introduced. In addition, considering that a low-density parity-check code (Low-Density Parity-Check Code, LDPC) with higher parallelism may be introduced, one TB in 5G may be split into more CBs compared with 4G.

When one TB may be split into more CBs, if only a few of the CBs received by UE are not correctly decoded and a large quantity of CBs are correctly decoded, continuing using a prior-art manner in which HARQ feedback and retransmission are performed for the TB greatly affects transmission efficiency of a system.

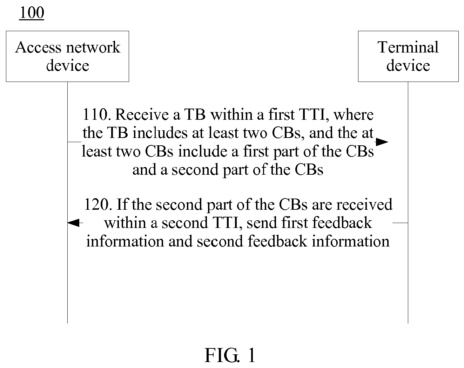

In view of this, the embodiments of this application provide a feedback information sending method and a feedback information receiving method, to improve transmission efficiency of a system. With reference to FIG. 1 to FIG. 3, the following describes in detail the feedback information sending method and the feedback information receiving method that are provided in the embodiments of this application.

The following numbers "first" and "second" in the embodiments of this application are only used to distinguish between different objects, for example, to distinguish between different TTIs or different information.

FIG. 1 is a schematic interaction diagram of a feedback information sending method 100 according to an embodiment of this application. As shown in FIG. 1, the method 100 mainly includes steps 110 and 120.

110. A terminal device receives, within a first TTI, a TB sent by an access network device, where the TB includes at least two CBs, and the at least two CBs include a first part of the CBs and a second part of the CBs.

120. If the terminal device, within a second TTI, receives the second part of the CBs sent by the access network device, and does not receive the first part of the CBs, the terminal device sends first feedback information and second feedback information to the access network device. The access network device receives the first feedback information and the second feedback information that are sent by the terminal device.

The first feedback information is used to feed back whether the terminal device correctly decodes the first part of the CBs, the second feedback information is used to feed back whether the terminal device correctly decodes the second part of the CBs, and the second TTI is after the first TTI in a time sequence.

It should be noted that the second feedback information is used to feed back whether the terminal device correctly decodes the second part of the CBs. Optionally, in an embodiment, the second part of the CBs herein are not limited to the second part of the CBs received by the terminal device within the first TTI, or the second part of the CBs that are retransmitted by the access network device and that are received within the second TTI.

Alternatively, optionally, in another embodiment, the second part of the CBs herein are the retransmitted CBs received by the terminal device within the second TTI. In this case, there is a possibility that the terminal device finds that some CBs are retransmitted. To be specific, in this case, the access network device indicates, to the terminal device, that current retransmission includes the second part of the CBs, but does not include the first part of the CBs. In this way, the terminal device understands that the second part of the CBs in previous initial transmission are affected CBs, for example, CBs that are punctured or interfered with, and therefore the terminal device does not perform HARQ combination on decoding information of the second part of the CBs in the current retransmission and decoding information of the second part of the CBs in the previous initial transmission, and does not consider the second part of the CBs in the previous initial transmission during decoding. Alternatively, the access network device may directly indicate, to the terminal device, that the second part of the CBs in current retransmission are CBs affected in previous initial transmission, and therefore the terminal device does not perform HARQ combination on decoding information of the second part of the CBs in the current retransmission and decoding information of the second part of the CBs in the previous initial transmission, and does not consider the second part of the CBs in the previous initial transmission during decoding.

It should be understood that in this embodiment of this application, the first part of the CBs and the second part of the CBs are two parts of one TB. Alternatively, it may be understood that all CBs in one TB are considered as a universal set, the universal set includes two subsets, one subset includes the first part of the CBs, and the other subset includes the second part of the CBs. The first part of the CBs and the second part of the CBs may not overlap at all, in other words, the first part of the CBs and the second part of the CBs do not include a same CB. Alternatively, the first part of the CBs and the second part of the CBs may partially overlap, in other words, the first part of the CBs and the second part of the CBs include a same CB.

The foregoing eMBB service and URLLC service are used as an example. When the access network device occupies some time-frequency resources to send eMBB service data to the terminal device, URLLC service data may need to be sent suddenly. The URLLC service has a low latency requirement, and a priority of the URLLC service is higher than that of the eMBB service. Therefore, the access network device may puncture, for a short time, a TB that is used to send the eMBB service data, to send the URLLC service with a higher service priority. Alternatively, the access network device may send, in a superposition manner, the URLLC service data on a TB on which the eMBB service data has been sent.

It may be understood that due to the puncturing the TB by the access network device, it is very likely that some CBs in the TB cannot be received by the terminal device because the CBs are punctured for the URLLC service data. Alternatively, in a superposition-based sending case, because URLLC sending causes interference to eMBB sending, it is very likely that the terminal device cannot correctly decode a CB on which the URLLC service data and the eMBB service data are sent in a superposition manner.

In this example, a CB that is not punctured or on which the URLLC service data and the eMBB service data are not sent in a superposition manner is the first part of the CBs. On the contrary, a CB that is punctured or on which the service data is sent in a superposition manner is the second part of the CBs.

It should be noted that in the foregoing example, the puncturing specifically means that eMBB transmission is covered (or rewritten) by URLLC transmission. To be specific, the access network device transmits the URLLC service data instead of the eMBB service data on some time-frequency resources on which the eMBB service data originally needs to be sent (or has been sent).

The superposition-based sending means that the URLLC service data is also transmitted on a time-frequency resource on which the eMBB service data is transmitted.

The first part of the CBs and the second part of the CBs are distinguished mainly in consideration that division can be performed on a basis that a decoding probability of the first part of the CBs and a decoding probability of the second part of the CBs are independent of each other. To be specific, decoding probability correlation between CBs in the first part of the CBs is relatively large, and decoding probability correlation between CBs in the second part of the CBs is also relatively large, but decoding correlation between the first part of the CBs and the second part of the CBs is not large. Specifically, for example, a second part of CBs in a TB of eMBB are punctured for URLLC or are used to send URLLC in a superposition manner, but a first part of the CBs are not affected by the URLLC. In this case, it is very likely that the second part of the CBs are not correctly decoded, but there is a larger probability that the first part of the CBs are correctly decoded. For another example, a URLLC service in a neighboring cell causes inter-cell interference to a second part of CBs in a TB of eMBB in a current cell, but causes no interference to a first part of the CBs. Likewise, it is very likely that the second part of the CBs are not correctly decoded, but there is a larger probability that the first part of the CBs are correctly decoded. Other similar cases are not limited provided that the decoding probability of the first part of the CBs and the decoding probability of the second part of the CBs can be independent of each other.

Specifically, that the terminal device sends the first feedback information and the second feedback information to the access network device includes: sending the first feedback information and the second feedback information to the access network device within a same TTI. Alternatively, the terminal device may send the first feedback information and the second feedback information to the access network device within different TTIs.

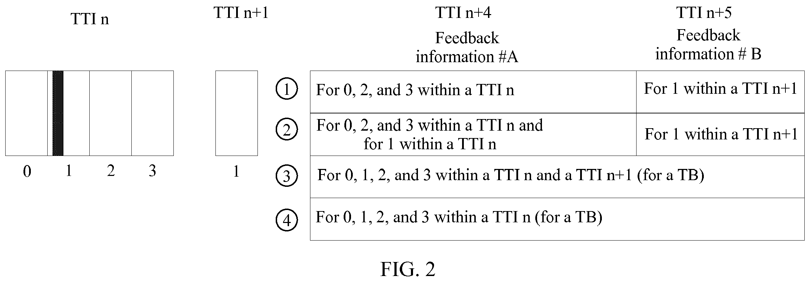

FIG. 2 is a schematic diagram of sending feedback information according to an embodiment of this application. As shown in FIG. 2, that a terminal device sends feedback information to an access network device mainly includes the following processes.
(1) Within a TTI n, the access network device sends a TB to the terminal device, where the TB includes four code blocks CBs (as shown in FIG. 2, the four CBs are sequentially denoted as a CB #0, a CB #1, a CB #2, and a CB #3). Each CB carries eMBB service data. The terminal device receives the TB.

In addition, a time-frequency resource occupied by the code block CB #1 is punctured for URLLC service data, or is used to send URLLC service data in a superposition manner.

It should be noted that only one TB is used as an example in FIG. 2. Apparently, the access network device may send one or more TBs to the terminal device, and the terminal device gives feedbacks to the access network device in the same process. Herein, only one TB is used as an example for description.

It may be understood that in a puncturing-based sending case, because the eMBB service data is no longer transmitted on the punctured CB, the terminal device can receive only partial eMBB service data (from CBs that are not punctured), but cannot receive eMBB service data that originally needs to be transmitted on the punctured CB. In a superposition-based sending case, due to strong interference of the URLLC service data, there is a high probability that a CB (namely, the CB #1) that carries both the eMBB service data and the URLLC service data cannot be correctly received by the terminal device.

In this embodiment of this application, before the terminal device feeds back a result of decoding the TB, the access network device retransmits the CB (namely, an example of a second part of CBs) used for puncturing-based sending or superposition-based sending, in other words, performs step 202.

(2) Within a TTI n+1, the access network device retransmits the CB #1 to the terminal device.

(3) The terminal device feeds back a decoding result (to be specific, about whether the TB is correctly decoded) to the access network device.

It should be noted that (3) and (2) are performed in different time sequences in different feedback manners. This should be subject to specific implementations of the following embodiments.

Optionally, in an embodiment, the terminal device sends first feedback information to the access network device within a third TTI, and sends second feedback information to the access network within a fourth TTI, where the third TTI and the fourth TTI are different TTIs in terms of time.

In this embodiment, the terminal device respectively feeds back a result of decoding a first part of the CBs and a result of decoding the second part of the CBs to the access network device within different TTIs by using the first feedback information and the second feedback information.

Optionally, in an embodiment, the terminal device sends first feedback information and second feedback information to the access network device within a fifth TTI.

To be specific, in this embodiment of this application, after the terminal device receives the first part of the CBs and the second part of the CBs that are sent by the access network device, and further receives the second part of the CBs retransmitted by the access network device, the terminal device separately feeds back, to the access network device, whether the first part of the CBs are correctly decoded and whether the second part of the CBs are correctly decoded. Specifically, the first feedback information used to feed back whether the first part of the CBs are correctly decoded and the second feedback information used to feed back whether the second part of the CBs are correctly decoded may be sent to the access network device within a same TTI, or may be sent to the access network device within different TTIs.

After the access network device retransmits the second part of the CBs to the terminal device, the terminal device uses different feedback manners based on whether the terminal device receives the retransmitted second part of the CBs in a receive time window after a first TTI. The following separately describes the manners.

It should be noted that "whether the retransmitted second part of the CBs are received" herein means whether the terminal device receives a downlink control channel sent by the access network device. The downlink control channel is used to schedule a data channel, the data channel is used to carry a TB that is to be sent to the terminal device by the access network device, and the TB includes the second part of the CBs.

### Case 1:

The terminal device receives, in the receive time window, the second part of the CBs retransmitted by the access network device.

Specifically, the following several optional feedback manners are included in Case 1.

### Manner 1:

Optionally, in an embodiment, the first feedback information is specifically used to feed back whether the terminal device correctly decodes the first part of the CBs received within the first TTI, and the second feedback information is specifically used to feed back whether the terminal device correctly decodes the second part of the CBs received within a second TTI.

With reference to the foregoing steps 201 and 202, referring to a feedback manner in FIG. 2, the terminal device sends feedback information #A to the access network device within a TTI n+4, to feed back, to the access network device, whether the CB #0, the CB #2, and the CB #3 that are received within the TTI n are correctly decoded; and sends feedback information #B to the access network device within a TTI n+5, to feed back, to the access network device, whether the retransmitted CB #1 received within the TTI n+1 is correctly decoded.

### Manner 2:

Optionally, in an embodiment, the first feedback information includes a first part of the feedback information and a second part of the feedback information, the first part of the feedback information is used to feed back whether the terminal device correctly decodes the first part of the CBs received within the first TTI, and the second part of the feedback information is used to feed back whether the terminal device correctly decodes the second part of the CBs received within the first TTI; and
the second feedback information is specifically used to indicate whether the terminal device correctly decodes the second part of the CBs received within a second TTI.

Referring to a feedback manner in FIG. 2, the terminal device sends feedback information #A to the access network device within a TTI n+4. Specifically, the feedback information #A includes two parts of feedback information, a first part of the feedback information is used to indicate whether the CB #0, the CB #2, and the CB #3 that are received within the TTI n are correctly decoded, and a second part of the feedback information is used to indicate whether the CB #1 received within the TTI n is correctly decoded. The terminal device sends feedback information #B to the access network device within a TTI n+5, to feed back, to the access network device, whether the CB #1 received within the TTI n+1 is correctly decoded.

It may be learned, from the foregoing descriptions of the TB and the CB, that cyclic redundancy check of one TB includes two layers of CRC check: CRC check (a first layer of CRC check) for each CB included in the TB and CRC check (a second layer of CRC check) for the entire TB.

It should be understood that the two layers of CRC check are performed in consideration that CRC check on all CBs in one TB succeeds, but actually, some CBs on which CRC check succeeds may not be correctly decoded. In other words, false alarms may occur in decoding of these CBs. In addition, a quantity of false alarms increases as the TB is divided into more CBs. Therefore, after CRC check on each CB succeeds, CRC check further needs to be performed on the entire TB. In this way, once false alarms occur in some CBs, CRC check on the entire TB does not succeed even if CRC check on all the CBs succeeds. Therefore, it can be accurately determined whether each CB in the TB is correctly decoded.

In this embodiment of this application, considering that false alarms may occur in CRC check on some CBs, a concept of the two layers of CRC check is applied to independent feedbacks on the first part of the CBs and the second part of the CBs.

Optionally, in an embodiment, the terminal device sends fourth feedback information to the access network device within the third TTI, where the fourth feedback information is used to feed back whether the terminal device correctly decodes the TB; and/or
the terminal device sends fifth feedback information to the access network device within the fourth TTI, where the fifth feedback information is used to feed back whether the terminal device correctly decodes the TB.

With reference to the foregoing descriptions, when the terminal device gives feedbacks to the access network device within different TTIs, the terminal device sends the first feedback information to the access network device within the third TTI, to feed back whether the terminal device correctly decodes the first part of the CBs; and sends the second feedback information to the access network device within the fourth TTI, to feed back whether the terminal device correctly decodes the second part of the CBs. In this embodiment, the terminal device also sends the fourth feedback information within the third TTI, to feed back whether the TB is correctly decoded. Alternatively, the terminal device also sends the fifth feedback information within the fourth TTI, to feed back whether the TB is correctly decoded.

Optionally, in an embodiment, the terminal device sends sixth feedback information to the access network device within the fifth TTI, where the sixth feedback information is used to feed back whether the terminal device correctly decodes the TB.

Similarly, when sending the first feedback information and the second feedback information to the access network device within a same TTI (namely, the fifth TTI), the terminal device may also send the sixth feedback information to the access network device within the fifth TTI, to feed back whether the terminal device correctly decodes the TB. This manner can avoid a false alarm that may occur in a process in which the terminal device decodes the CB.

In the foregoing manner 1 and manner 2, the second part of the CBs that are sent by the access network device within the second TTI and that are received by the terminal device are received by the terminal device in the receive time window after the first TTI. The receive time window is used by the terminal device to determine maximum duration for waiting for the access network device to retransmit the second part of the CBs after the first TTI.

It should be noted that duration of the receive time window is determined mainly in consideration of a processing time for receiving and decoding the TB or the CB by the terminal device and a packet assembly time for generating feedback information after decoding.

Specifically, the terminal device cannot send the feedback information within the third TTI in a timely manner if the duration of the receive time window is too long, for example, if an end point of the receive time window is relatively close to a start point of the third TTI. To control the receive time window and a corresponding processing time, duration occupied by the retransmitted second part of the CBs in the second TTI is usually less than duration of the second TTI, but the entire TB can occupy the entire first TTI in terms of time during initial transmission within the first TTI. In this way, the terminal device may perform decoding processing on the second part of the CBs received within the second TTI and packet assembly on the corresponding feedback information before the second TTI ends. Correspondingly, the duration of the receive time window may alternatively be reserved based on the duration occupied by the retransmitted second part of the CBs. For example, if the duration of the second TTI is four times the duration occupied by the retransmitted second part of the CBs, it may be determined that the end point of the receive time window is an end point of the second TTI, to be specific, the receive time window includes four candidate locations for sending the retransmitted second part of the CBs by the access network device. Certainly, another similar manner of determining the receive time window and selection of the duration occupied by the retransmitted second part of the CBs are not excluded provided that both the processing time for receiving and decoding the TB or the CB and the packet assembly time for generating the feedback information after decoding can be considered.

In the foregoing manner 1 and manner 2, when receiving, in the receive time window, the second part of the CBs sent by the access network device, the terminal device separately gives feedbacks on the first part of the CBs and the second part of the CBs. The following shows another feedback manner used by the terminal device when the terminal device receives, in the receive time window after the first TTI, the second part of the CBs retransmitted by the access network device.

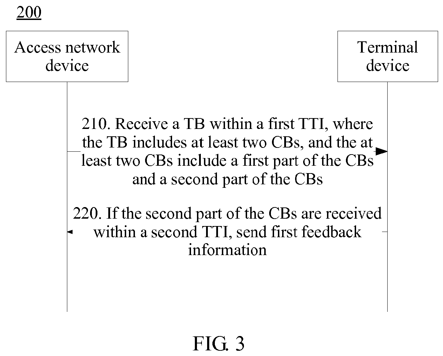

FIG. 3 is a schematic interaction diagram of a feedback information sending method 200 according to another embodiment of this application. As shown in FIG. 3, the method 200 mainly includes steps 210 and 220.

### Manner 3:

210. A terminal device receives, within a first TTI, a transport block TB sent by an access network device, where the TB includes at least two code blocks CBs, and the at least two CBs include a first part of the CBs and a second part of the CBs.

220. If the terminal device, within a second TTI, receives the second part of the CBs sent by the access network device, and does not receive the first part of the CBs, the terminal device sends first feedback information to the access network device within a third TTI based on whether the first part of the CBs received within the first TTI and the second part of the CBs received within the second TTI are correctly decoded, where the first feedback information is used to feed back whether the terminal device correctly decodes the first part of the CBs received within the first TTI and the second part of the CBs received within the second TTI, and the second TTI is in a receive time window after the first TTI.

It may be understood that in the foregoing method 100, the terminal device receives the TB that is sent by the access network device within the first TTI and that includes the first part of the CBs and the second part of the CBs. Subsequently, if the terminal device, within the second TTI, further receives the second part of the CBs sent by the access network device, and does not receive the first part of the CBs, the terminal device separately feeds back, to the access network device, whether the first part of the CBs are correctly decoded and whether the second part of the CBs are correctly decoded.

Like the method 100, in the method 200, the terminal device receives the TB that is sent by the access network device within the first TTI and that includes the first part of the CBs and the second part of the CBs, and the terminal device receives, in the receive time window after the first TTI, the second part of the CBs sent by the access network device within the second TTI. A difference lies in that in manner 1 and manner 2, the terminal device separately decodes the CBs received within the first TTI and the CBs received within the second TTI, and feeds back decoding results to the access network device, but in Manner 3, the terminal device jointly feeds back, to the access network device, whether the first part of the CBs received within the first TTI are correctly decoded and whether the second part of the CBs received within the second TTI are correctly decoded.

In other words, in this embodiment of this application, if the terminal device receives, in the receive time window after the first TTI within which the access network device sends the TB, some CBs (namely, the second part of the CBs) that are retransmitted by the access network device, the terminal device jointly decodes the received CBs.

It should be understood that the joint decoding herein means decoding all CBs (including an initially-transmitted CB and a retransmitted CB) that belong to a same TB and that are received within different TTIs. Further, with reference to a result of the decoding, a decoding result (to be specific, about whether the entire TB is correctly decoded) for the entire TB is fed back to the access network device.

In this embodiment of this application, the receive time window is used by the terminal device to determine maximum duration for waiting for the access network device to send the second part of the CBs after the first TTI.

In other words, after receiving the TB sent by the access network device within the first TTI, the terminal device monitors, in the receive time window after the first TTI, whether the access network device continues to retransmit data. If the terminal device receives, within the second TTI in the receive time window after the first TTI, the CBs retransmitted by the access network device, the terminal device jointly decodes the entire TB based on the first part of the CBs and the second part of the CBs that are received within the first TTI and the retransmitted CBs (to be specific, the second part of the CBs) received within the second TTI, and subsequently feeds back a result of the joint decoding to the access network device.

The second part of the CBs herein are not limited to the second part of the CBs received by the terminal device within the first TTI, or the second part of the CBs that are retransmitted by the access network device and that are received within the second TTI.

Optionally, in another embodiment, the second part of the CBs herein are the retransmitted CBs received by the terminal device within the second TTI. In this case, there is a possibility that the terminal device finds that the CBs received within the second TTI are some retransmitted CBs. In this case, the access network device needs to indicate, to the terminal device, that current retransmission includes the second part of the CBs, but does not include the first part of the CBs. In this way, the terminal device determines the second part of the CBs in previous initial transmission as affected CBs (for example, CBs that are punctured or interfered with). Therefore, the terminal device does not perform HARQ combination on decoding information of the second part of the CBs in the current retransmission and decoding information of the second part of the CBs in the previous initial transmission, and does not consider the second part of the CBs in the previous initial transmission during decoding.

Alternatively, the access network device may directly indicate, to the terminal device, that the second part of the CBs in current retransmission are CBs affected in previous initial transmission, and therefore the terminal device does not perform HARQ combination on decoding information of the second part of the CBs in the current retransmission and decoding information of the second part of the CBs in the previous initial transmission, and does not consider the second part of the CBs in the previous initial transmission during decoding.

Correspondingly, the terminal device monitors, in the receive time window after the first TTI, whether the access network device continues to retransmit a CB. If the terminal device receives, in the receive time window, no CB retransmitted by the access network device, the terminal device decodes, after the receive time window, the entire TB based on the first part of the CBs and the second part of the CBs that are received within the first TTI, and subsequently feeds back a decoding result to the access network device.

Continue to refer to FIG. 2. As shown in a manner in FIG. 2, the access network device sends the TB to the access network device within the TTI n, and the TB includes the code blocks CB #0, CB #1, CB #2, and CB #3. The access network device retransmits the CB #1 to the terminal device within the TTI n+1. In this embodiment, it is considered that the terminal device receives, in a receive time window after the TTI n, the CB #1 retransmitted by the access network device. In this case, the terminal device sends feedback information #A to the access network device within a TTI n+4, to feed back, to the access network device, whether the terminal device correctly decodes the entire TB. Whether the terminal device correctly decodes the entire TB is fed back after the CB #0, the CB #1, the CB #2, and the CB #3 that are sent by the access network device within the TTI n and the CB #1 that is retransmitted by the access network device within the TTI n+1 are jointly decoded.

Optionally, in an embodiment, the method further includes:
if the terminal device does not receive the second part of the CBs in the receive time window, the terminal device sends second feedback information to the access network device within a fourth TTI, where the second feedback information is used to feed back whether the terminal device correctly decodes the TB received within the first TTI, and the fourth TTI is the same as the third TTI or the fourth TTI is before the third TTI in a time sequence.

It should be understood that the first feedback information is used to feed back whether the terminal device correctly decodes the TB received within the first TTI, to be specific, the terminal device decodes the entire TB only by using the first part of the CBs and the second part of the CBs that are received within the first TTI.

Optionally, in an embodiment, the method further includes:
if the terminal device receives the second part of the CBs within a fifth TTI in the receive time window, the terminal device sends third feedback information to the access network device within a sixth TTI, where the third feedback information is used to feed back, to the access network device, whether the terminal device correctly decodes the TB and/or the second part of the CBs received within the fifth TTI.

It should be noted that, if duration occupied by the retransmitted second part of the CBs is far less than a length of one TTI, decoding processing and feedback sending for the retransmitted second part of the CBs may be performed in advance. Therefore, there also is no strict limitation that the sixth TTI should be after the third TTI in a time sequence.

In addition, it should be further noted that the third feedback information and the foregoing first feedback information are independent feedback information, and/or the third feedback information and the foregoing second feedback information are independent feedback information. In other words, corresponding feedback information sent in the receive time window is independent of corresponding feedback information sent outside the receive time window. In addition, the sixth TTI used to send the third feedback information is independent of the third TTI used to send the first feedback information, and/or the sixth TTI used to send the third feedback information is independent of the fourth TTI used to send the second feedback information.

Specifically, as described above, if the terminal device does not receive, in the receive time window after the first TTI, some CBs (namely, the second part of the CBs) retransmitted by the access network device, the terminal device sends the first feedback information to the access network within the third TTI, to feed back whether the terminal device correctly decodes the entire TB based on the first part of the CBs and the second part of the CBs that are received within the first TTI. Subsequently, if the terminal device receives, within the fifth TTI outside the receive time window, the second part of the CBs sent by the access network device, the terminal device sends the third feedback information to the access network device on a basis that the terminal device has already sent the first feedback information to the access network device. Herein, the third feedback information includes a plurality of forms.

For example, the third feedback information is used to feed back whether the second part of the CBs received within the fifth TTI are correctly decoded.

Alternatively, the third feedback information is used to feed back whether the entire TB is correctly decoded. In this case, the terminal device jointly decodes the TB based on the first part of the CBs and the second part of the CBs that are received within the first TTI and the second part of the CBs that are received outside the receive time window, and feeds back a decoding result to the access network device by using the third feedback information.

Alternatively, the third feedback information is used to feed back both whether the second part of the CBs received within the fifth TTI are correctly decoded and whether the TB is correctly decoded.

In this embodiment of this application, in a case contrary to Case 1, after the access network device retransmits the second part of the CBs to the terminal device, the terminal device does not receive the retransmitted second part of the CBs.

Similarly, that "the second part of the CBs retransmitted by the access network device are not received" herein means that the terminal device does not receive a downlink control channel that is sent by the access network device and that is used to carry the retransmitted second part of the CBs.

### Case 2:

The terminal device does not receive, in the receive time window, the second part of the CBs retransmitted by the access network device.

In other words, in Case 2, the terminal device receives the second part of the CBs outside the receive time window.

Optionally, in an embodiment, the method further includes:
if the terminal device does not receive the second part of the CBs after the first TTI, the terminal device sends third feedback information to the access network device, where the third feedback information is used to feed back whether the terminal device correctly decodes the TB received within the first TTI.

In some cases, the terminal device may miss detecting a control channel sent by the access network device. For example, the terminal device misses detecting a downlink control channel for retransmitting the second part of the CBs. In this case, the terminal device does not receive, in the receive time window, the second part of the CBs retransmitted by the access network device. In this case, the terminal device feeds back, to the access network device based on the CB #0, the CB #1, the CB #2, and the CB #3 that are sent by the access network device within the TTI n, whether the entire TB is correctly decoded.

Optionally, the terminal device sends missed-detection indication information to the access network device, where the missed-detection indication information is used to indicate that the terminal device misses detecting the downlink control channel.

Correspondingly, the access network device may process the missed-detection of the terminal device as a NACK feedback based on the missed-detection indication information.

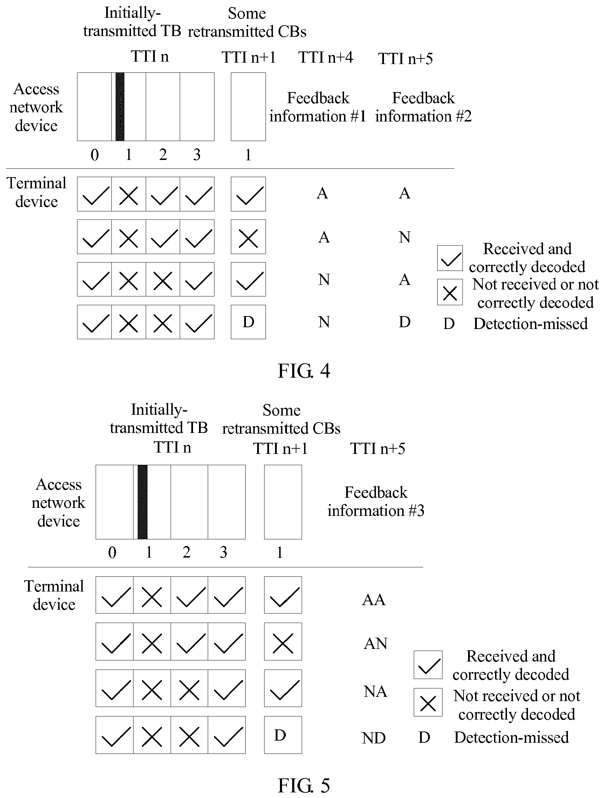

FIG. 4 shows an example of sending feedback information according to examples of this application. As shown in FIG. 4, an access network device sends a TB including a CB #0, a CB #1, a CB #2, and a CB #3 to a terminal device within a TTI n, and retransmits the CB #1 within a TTI n+1. The terminal device sends feedback information #1 to the access network device within a TTI n+4, to feed back whether the CB #0, the CB #2, and the CB #3 (used as an example of a first part of CBs) that are received within the TTI n are correctly decoded; and sends feedback information #2 to the access network device within a TTI n+5, to feed back whether the CB #1 (used as an example of a second part of the CBs) received within the TTI n+1 is correctly decoded.

In addition, if the terminal device misses detecting the retransmitted CB, the terminal device sends missed-detection indication information to the access network device, to indicate, to the access network device, that the terminal device misses detecting the retransmitted CB. The access network device usually processes the missed-detection as incorrect decoding.

FIG. 5 shows an example of sending feedback information according to the invention. Different from FIG. 4, a terminal device gives feedbacks on both a first part of CBs and a second part of the CBs within one TTI. According to the invention, feedback information #3 sent by the terminal device to an access network device includes two parts of feedback information, i.e. it includes two indication bits. A first indication bit is used to indicate whether a CB #0, a CB #2, and a CB #3 that are received within a TTI n are correctly decoded. A second indication bit is used to indicate whether a CB #1 received within a TTI n+1 is correctly decoded.

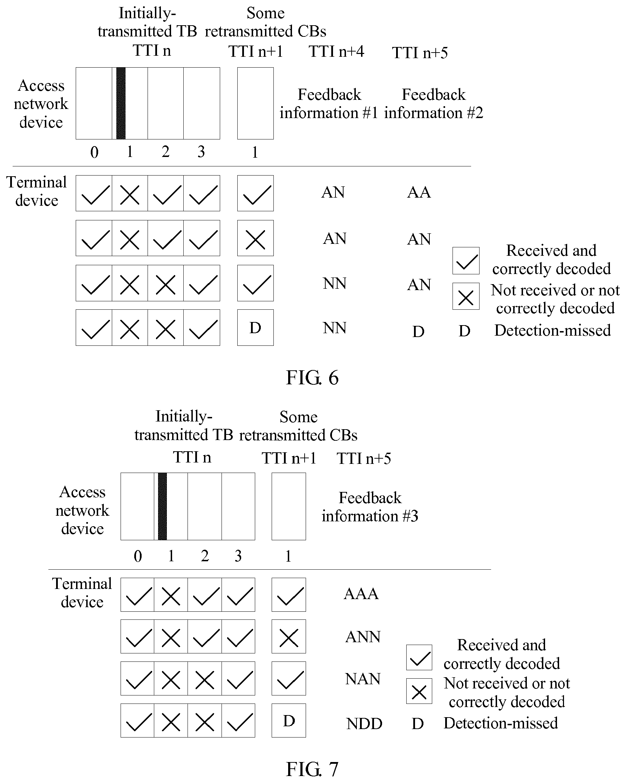

FIG. 6 shows still another example of sending feedback information according to not claimed examples. As shown in FIG. 6, a terminal device separately feeds back, to an access network device within different TTIs, whether a CB #0, a CB #2, and a CB #3 that are received within a TTI n are correctly decoded and whether a CB #1 received within a TTI n+1 is correctly decoded. Further, in a not claimed feedback manner shown in FIG. 6, the terminal device feeds back, to the access network device within a TTI n+4, whether the CB #0, the CB #2, and the CB #3 are correctly decoded, and simultaneously feeds back, to the access network device, whether an entire TB can be correctly decoded based on the CB #0, the CB #1, the CB #2, and the CB #3 that are received within the TTI n; and/or the terminal device feeds back, to the access network device within a TTI n+5, whether a retransmitted CB (namely, the CB #1) is correctly decoded, and simultaneously feeds back, to the access network device, whether the entire TB can be correctly decoded based on the CB #0, the CB #1, the CB #2, and the CB #3 that are received within the TTI n and the TTI n+1.

FIG. 7 shows an example of sending feedback information according to the present invention. In the not claimed feedback manner shown in FIG. 6, the terminal device gives feedbacks to the access network device within different TTIs. Different from FIG. 6, in FIG. 7, the terminal device feeds back, to the access network device within one TTI (a TT1 n+5), both whether a CB #0, a CB #2, and a CB #3 that are received within a TTI n are correctly decoded and whether a CB #1 received within a TTI n+1 is correctly decoded. Simultaneously, the terminal device feeds back, to the access network device within the TTI n+5, whether an entire TB is correctly decoded based on the CB #0, the CB #2, and the CB #3 that are received within the TTI and the CB #1 received within the TTI n+1.

In the prior art, the terminal device gives a feedback on the entire TB, and the access network device subsequently retransmits the entire TB if the terminal device does not correctly decode all the CBs. Therefore, the access network device needs to retransmit the entire TB even if only some CBs or even a few CBs are not correctly decoded by the terminal device. In the embodiments of this application, after the access network device sends the transport block TB including the plurality of CBs to the terminal device, the terminal device separately gives feedbacks on a correctly-decoded CB and an incorrectly-decoded CB, so that the access network device retransmits only the incorrectly-decoded CB. In contrast, in the feedback information sending method and the feedback information receiving method that are provided in the embodiments of this application, the correctly-decoded CB is prevented from being repeatedly sent, thereby improving transmission efficiency of the system.

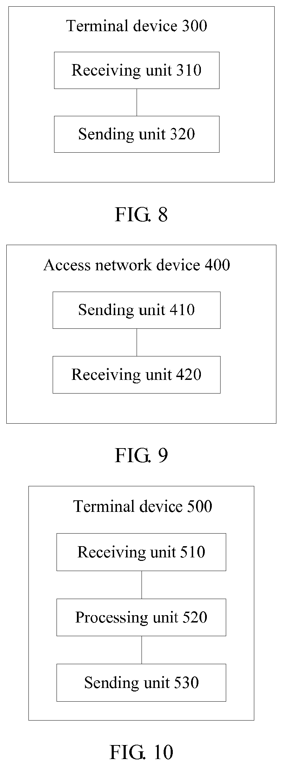

With reference to FIG. 1 to FIG. 7, the foregoing describes in detail the feedback information sending method and the feedback information receiving method that are provided in the embodiments of this application. With reference to FIG. 8 to FIG. 11, the following describes in detail an access network device and a terminal device that are provided in the embodiments of this application.

FIG. 8 is a schematic block diagram of a terminal device 300 according to an embodiment of this application. As shown in FIG. 8, the terminal device 300 includes:
a receiving unit 310, configured to receive, within a first transmission time interval TTI, a transport block TB sent by an access network device, where the TB includes at least two code blocks CBs, and the at least two CBs include a first part of the CBs and a second part of the CBs; and
a sending unit 320, configured to: if the receiving unit, within a second TTI, receives the second part of the CBs sent by the access network device, and does not receive the first part of the CBs, send first feedback information and second feedback information to the access network device, where the first feedback information is used to feed back whether the terminal device correctly decodes the first part of the CBs, the second feedback information is used to feed back whether the terminal device correctly decodes the second part of the CBs, and the second TTI is after the first TTI in a time sequence.

The foregoing and other operations or functions of the units in the terminal device 300 provided in this embodiment of this application are separately used to implement a corresponding procedure performed by the terminal device in the feedback information sending method 100 provided in the embodiments of this application. For brevity, details are not described herein.

FIG. 9 is a schematic block diagram of an access network device 400 according to an embodiment of this application. As shown in FIG. 9, the access network device 400 includes:
a sending unit 410, configured to send a transport block TB to a terminal device within a first transmission time interval TTI, where the TB includes at least two code blocks CBs, and the at least two CBs include a first part of the CBs and a second part of the CBs; and
a receiving unit 420, configured to: if the sending unit, within a second TTI, sends the second part of the CBs to the terminal device, and does not send the first part of the CBs to the terminal device, receive first feedback information and second feedback information that are sent by the terminal device, where the first feedback information is used to feed back whether the terminal device correctly decodes the first part of the CBs, the second feedback information is used to feed back whether the terminal device correctly decodes the second part of the CBs, and the second TTI is after the first TTI in a time sequence.

The foregoing and other operations or functions of the units in the access network device 400 provided in this embodiment of this application are separately used to implement a corresponding procedure performed by the access network device in the feedback information receiving method 100 provided in the embodiments of this application. For brevity, details are not described herein.

FIG. 10 is a schematic block diagram of a terminal device 500 according to an embodiment of this application. As shown in FIG. 8, the terminal device 500 includes:
a receiving unit 510, configured to receive, within a first transmission time interval TTI, a transport block TB sent by an access network device, where the TB includes at least two code blocks CBs, and the at least two CBs include a first part of the CBs and a second part of the CBs, where
the receiving unit 510 is further configured to receive, within a second TTI, the second part of the CBs sent by the access network device;
a processing unit 520, configured to: if the receiving unit, within the second TTI, receives the second part of the CBs sent by the access network device, and does not receive the first part of the CBs, determine whether the first part of the CBs received by the receiving unit within the first TTI and the second part of the CBs received by the receiving unit within the second TTI are correctly decoded; and
a sending unit 530, configured to send first feedback information to the access network device within a third TTI, where the first feedback information is used to feed back whether the terminal device correctly decodes the first part of the CBs received by the receiving unit within the first TTI and the second part of the CBs received by the receiving unit within the second TTI, the second TTI is in a receive time window after the first TTI, and the receive time window is used by the processing unit to determine maximum duration for waiting for the access network device to send the second part of the CBs after the first TTI.

The foregoing and other operations or functions of the units in the terminal device 500 provided in this embodiment of this application are separately used to implement a corresponding procedure performed by the terminal device in the feedback information sending method 200 provided in the embodiments of this application. For brevity, details are not described herein.

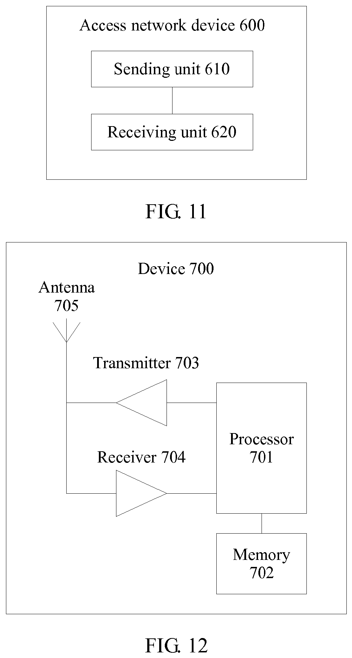

FIG. 11 is a schematic block diagram of an access network device 600 according to an embodiment of this application. As shown in FIG. 11, the access network device 600 includes:
a sending unit 610, configured to send a transport block TB to a terminal device within a first transmission time interval TTI, where the TB includes at least two code blocks CBs, and the at least two CBs include a first part of the CBs and a second part of the CBs; and
a receiving unit 620, configured to: if the receiving unit, within a second TTI, sends the second part of the CBs to the terminal device, and does not send the first part of the CBs to the terminal device, receive, within a third TTI, first feedback information sent by the terminal device, where the first feedback information is used to feed back whether a processing unit correctly decodes the first part of the CBs received by the receiving unit within the first TTI and the second part of the CBs received by the receiving unit within the second TTI, the second TTI is in a receive time window after the first TTI, and the receive time window is used by the processing unit to determine maximum duration for waiting for the access network device to send the second part of the CBs after the first TTI.

The foregoing and other operations or functions of the units in the access network device 600 provided in this embodiment of this application are separately used to implement a corresponding procedure performed by the access network device in the feedback information receiving method 200 provided in the embodiments of this application. For brevity, details are not described herein.

FIG. 12 is a schematic structural diagram of a terminal device 700 according to an embodiment of this application. As shown in FIG. 12, the terminal device 700 includes one or more processors 701, one or more memories 702, and one or more transceivers (each transceiver includes a transmitter 703 and a receiver 704). The transmitter 703 or the receiver 704 is connected to one or more antennas 705, and sends or receives a signal by using the antennas. The memory 702 stores a computer program instruction (or code). The processor 701 executes the computer program instruction stored in the memory 702, to implement a corresponding procedure and/or operation that are/is performed by the terminal device in the feedback information sending method 100 provided in the embodiments of this application. For brevity, details are not described herein.

It should be noted that the terminal device 300 shown in FIG. 8 may be implemented by the terminal device 700 shown in FIG. 12. For example, the receiving unit shown in FIG. 8 may be implemented by the receiver shown in FIG. 12, and the sending unit may be implemented by the transmitter.

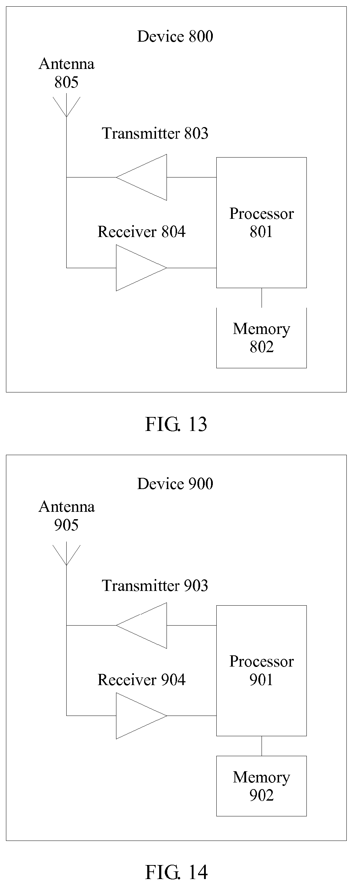

FIG. 13 is a schematic structural diagram of an access network device 800 according to an embodiment of this application. As shown in FIG. 13, the access network device 800 includes one or more processors 801, one or more memories 802, and one or more transceivers (each transceiver includes a transmitter 803 and a receiver 804). The transmitter 803 or the receiver 804 is connected to one or more antennas 805, and sends or receives a signal by using the antennas. The memory 802 stores a computer program instruction (or code). The processor 801 executes the computer program instruction stored in the memory 802, to implement a corresponding procedure and/or operation that are/is performed by the access network device in the feedback information receiving method 100 provided in the embodiments of this application. For brevity, details are not described herein.

Similarly, the access network device 400 shown in FIG. 9 may be implemented by the access network device 800 shown in FIG. 13. For example, the sending unit shown in FIG. 9 may be implemented by the transmitter shown in FIG. 13, and the receiving unit may be implemented by the receiver.

FIG. 14 is a schematic structural diagram of a terminal device 900 according to an embodiment of this application. As shown in FIG. 14, the terminal device 900 includes one or more processors 901, one or more memories 902, and one or more transceivers (each transceiver includes a transmitter 903 and a receiver 904). The transmitter 903 or the receiver 904 is connected to one or more antennas 905, and sends or receives a signal by using the antennas. The memory 902 stores a computer program instruction (or code). The processor 901 executes the computer program instruction stored in the memory 902, to implement a corresponding procedure and/or operation that are/is performed by the terminal device in the feedback information sending method 200 provided in the embodiments of this application. For brevity, details are not described herein.

Similarly, the terminal device 500 shown in FIG. 10 may be implemented by the terminal device 900 shown in FIG. 14. For example, the sending unit shown in FIG. 10 may be implemented by the transmitter shown in FIG. 14, the receiving unit may be implemented by the receiver, and the processing unit may be implemented by the processor.

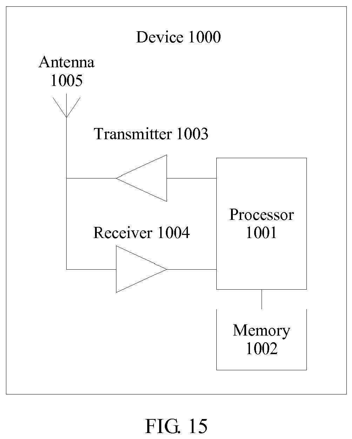

FIG. 15 is a schematic structural diagram of an access network device 1000 according to an embodiment of this application. As shown in FIG. 15, the access network device 1000 includes one or more processors 1001, one or more memories 1002, and one or more transceivers (each transceiver includes a transmitter 1003 and a receiver 1004). The transmitter 1003 or the receiver 1004 is connected to one or more antennas 1005, and sends or receives a signal by using the antennas. The memory 1002 stores a computer program instruction (or code). The processor 1001 executes the computer program instruction stored in the memory 1002, to implement a corresponding procedure and/or operation that are/is performed by the access network device in the feedback information receiving method 200 provided in the embodiments of this application. For brevity, details are not described herein.

Similarly, the access network device 600 shown in FIG. 11 may be implemented by the access network device 1000 shown in FIG. 15. For example, the sending unit shown in FIG. 11 may be implemented by the transmitter shown in FIG. 15, and the receiving unit may be implemented by the receiver.

In addition, this application provides a chip system. The chip system includes a processor, configured to implement functions of the terminal device in the foregoing method embodiments, for example, receive or send data and/or information in the foregoing method. In a possible design, the chip system further includes a memory. The memory is configured to store a program instruction and data that are necessary for the terminal device. The chip system may include a chip, or may include a chip and another discrete device.

This application further provides a chip system. The chip system includes a processor, configured to implement functions of the access network device in the foregoing method embodiments, for example, receive or send data and/or information in the foregoing method. In a possible design, the chip system further includes a memory. The memory is configured to store a program instruction and data that are necessary for the access network device. The chip system may include a chip, or may include a chip and another discrete device.

This application provides a computer-readable storage medium. The computer-readable storage medium stores an instruction. When the instruction is run on a computer, the computer performs a corresponding procedure and/or operation that are/is performed by the terminal device in the foregoing method embodiments.

This application provides a computer-readable storage medium. The computer-readable storage medium stores an instruction. When the instruction is run on a computer, the computer performs a corresponding procedure and/or operation that are/is performed by the access network device in the foregoing method embodiments.

In addition, this application provides a computer program product. The computer program product includes computer program code. When the computer program code is run on a computer, the computer performs a corresponding procedure and/or operation that are/is performed by the terminal device in the foregoing method embodiments.

In addition, this application provides a computer program product. The computer program product includes computer program code. When the computer program code is run on a computer, the computer performs a corresponding procedure and/or operation that are/is performed by the access network device in the foregoing method embodiments.

In the foregoing embodiments, the processor may be a central processing unit (Central Processing Unit, CPU), a microprocessor, an application-specific integrated circuit (application-specific integrated circuit, ASIC), one or more integrated circuits for controlling program execution in the solutions of this application, or the like. For example, the processor may include a digital signal processor device, a microprocessor device, an analog-to-digital converter, and a digital-to-analog converter. The processor may allocate control and signal processing functions of mobile devices between these devices based on respective functions of the devices. In addition, the processor may include a function for operating one or more software programs, and the software programs may be stored in a memory.

The memory may be a read-only memory (read-only memory, ROM), another type of static storage device capable of storing static information and instructions, a random access memory (random access memory, RAM), or another type of dynamic storage device capable of storing information and instructions, or may be an electrically erasable programmable read-only memory (Electrically Erasable Programmable Read-Only Memory, EEPROM), a compact disc read-only memory (Compact Disc Read-Only Memory, CD-ROM) or another compact disc storage, an optical disc storage (including a compressed optical disc, a laser disc, an optical disc, a digital versatile disc, a Blu-ray optical disc, and the like), a magnetic disk storage medium or another magnetic storage device, or any other medium capable of carrying or storing expected program code in a form of instructions or data structures and capable of being accessed by a computer, but is not limited thereto. The memory may independently exist, or may be integrated into the processor.

A transceiver may include, for example, an infrared transceiver, a using transceiver, a wireless universal serial bus (Universal Serial Bus, USB) transceiver, and a Bluetooth transceiver. Although not shown, the access network device can use a corresponding communications technology to send a signal (or data) by using a transmitter and/or receive a signal (data) by using a receiver.

A person of ordinary skill in the art may be aware that, in combination with the examples described in the embodiments disclosed in this specification, units and algorithm steps can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing described system, apparatus, and unit, reference may be made to a corresponding process in the foregoing method embodiments. Details are not described herein.

In the several embodiments provided in this application, it should be understood that the disclosed system, apparatus, and method may be implemented in other manners. For example, the described apparatus embodiments are merely examples. For example, the unit division is merely logical function division and there may be another division manner during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, to be specific, may be located in one position, or may be distributed on a plurality of network units. Some or all of the units may be selected based on actual requirements to achieve the objectives of the solutions of the embodiments.

In addition, the function units in the embodiments of this application may be integrated into one processing unit, or each of the units may exist alone physically, or two or more units may be integrated into one unit.

When the functions are implemented in a form of a software function unit and sold or used as an independent product, the functions may be stored in a computer-readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in the embodiments of this application. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the scope of the claims shall fall within the protection scope of this application. Therefore, the protection scope of this application shall be subject to the protection scope of the claims.

## Claims

1. A feedback information sending method (100, 200), wherein the method comprises
receiving (110, 210), by a terminal device, a transport block TB sent by an access network device, wherein the access network device sends the TB including a CB #0, a CB #1, a CB #2, and a CB #3 to the terminal device within a TTI n, and retransmits the CB #1 within another TTI, wherein a first part of the CBs is received within the TTI n and comprises the CB #0, the CB #2, and the CB #3, and a second part of the CBs is received in the other TTI and comprises the retransmitted CB #1; and
if the terminal device, within the other TTI, receives the second part of the CBs sent by the access network device, and does not receive the first part of the CBs, sending (120, 220), by the terminal device, first feedback information and second feedback information to the access network device, wherein the first feedback information is used to feed back whether the terminal device correctly decodes the first part of the CBs, the second feedback information is used to feed back whether the terminal device correctly decodes the second part of the CBs, and the other TTI is after the TTI n in a time sequence,
wherein a second indication bit is used to indicate whether the CB #1 received within the other TTI is correctly decoded, wherein
the other TTI is a TTI n+1;
wherein the terminal device sends the first feedback information to the access network device within a TTI n+5 and sends the second feedback information to the access network device within the TTI n+5, wherein a first indication bit is used to indicate whether the CB #0, the CB #2, and the CB #3 that are received within the TTI n are correctly decoded.

2. The method according to claim 1, wherein simultaneously with feeding back, within the TTI n+5, both whether a CB #0, a CB #2, and a CB #3 that are received within the TTI n are correctly decoded and whether a CB #1 received within the TTI n+1 is correctly decoded, the terminal device feeds back, to the access network device within the TTI n+5, whether the entire TB can be correctly decoded based on the CB #0, the CB #1, the CB #2, and the CB #3 that are received within the TTI n and the TTI n+1.

3. A feedback information receiving method, wherein the method comprises:
sending, by an access network device, a transport block TB including a CB #0, a CB #1, a CB #2, and a CB #3 to a terminal device within a first transmission time interval TTI and retransmitting the CB #1 within a second TTI, wherein a first part of the CBs is received by the terminal device within the first TTI and comprises the CB #0, the CB #2, and the CB #3, and a second part of the CBs is received by the terminal device within the second TTI and comprises the CB #1; and
if the access network device, within the second TTI, sends the second part of the CBs to the terminal device, and does not send the first part of the CBs to the terminal device, receiving, by the access network device, first feedback information and second feedback information that are sent by the terminal device, wherein the first feedback information is used to feed back whether the terminal device correctly decodes the first part of the CBs, the second feedback information is used to feed back whether the terminal device correctly decodes the second part of the CBs, and the second TTI is after the first TTI in a time sequence,
wherein a second indication bit is used to indicate whether the CB #1 received within the other TTI is correctly decoded,
wherein the first TTI is a TTI n and the second TTI is a TTI n+1;
wherein the receiving, by the access network device, first feedback information and second feedback information that are sent by the terminal device comprises:
receiving, by the access network device within a TTI n+5, the first feedback information that is sent by the terminal device and receiving, by the access network device within TTI n+5 the second feedback information that is sent by the terminal device, wherein a first indication bit is used to indicate whether the CB #0, the CB #2, and the CB #3 that are received within the TTI n are correctly decoded.

4. The method according to claim 3, wherein simultaneous with receiving feedback indicating both whether a CB #0, a CB #2, and a CB #3 that are received within the TTI n are correctly decoded and whether a CB #1 received within the TTI n+1 is correctly decoded, the access network device receives feed-back, from the terminal device within the TTI n+5, whether the entire TB can be correctly decoded based on the CB #0, the CB #1, the CB #2, and the CB #3 that are received within the TTI n and the TTI n+1.

5. A terminal device (300), comprising:
a receiving unit (310), configured to receive a transport block TB sent by an access network device (400), wherein the access network device (400) sends the TB including a CB #0, a CB #1, a CB #2, and a CB #3 to the terminal device (300) within a TTI n, and retransmits the CB #1 within an other TTI, wherein a first part of the CBs is received within the TTI n and comprises the CB #0, the CB #2, and the CB #3, and a second part of the CBs is received within the other TTI and comprises the CB #1; and
a sending unit (320), configured to: if the receiving unit (310), within the other TTI, receives, the second part of the CBs sent by the access network device (400), and does not receive the first part of the CBs, send first feedback information and second feedback information to the access network device (400), wherein the first feedback information is used to feed back whether the terminal device (300) correctly decodes the first part of the CBs, the second feedback information is used to feed back whether the terminal device (300) correctly decodes the second part of the CBs, and the other TTI is after the TTI n in a time sequence,
wherein a second indication bit is used to indicate whether the CB #1 received within the other TTI is correctly decoded,
wherein the other TTI is a TTI n+1;
wherein the sending unit (320) is specifically configured to send the first feedback information to the access network device (400) within a TTI n+5, and send the second feedback information to the access network device (400) within the TTI n+5,
wherein a first indication bit is used to indicate whether the CB #0, the CB #2, and the CB #3 that are received within the TTI n are correctly decoded.

6. The terminal device according to claim 5, wherein simultaneously with feeding back, within the TTI n+5, both whether a CB #0, a CB #2, and a CB #3 that are received within the TTI n are correctly decoded and whether a CB #1 received within the TTI n+1 is correctly decoded, the terminal device (300) is configured to, simultaneously with feeding back, within the TTI n+5, both whether a CB #0, a CB #2, and a CB #3 that are received within the TTI n are correctly decoded and whether a CB #1 received within the TTI n+1 is correctly decoded, feed-back, to the access network device (400) within the TTI n+5,, whether the entire TB can be correctly decoded based on the CB #0, the CB #1, the CB #2, and the CB #3 that are received within the TTI n and the TTI n+1.

7. An access network device (400), comprising:
a sending unit (410), configured to send a transport block TB including a CB #0, a CB #1, a CB #2, and a CB #3 to a terminal device (300) within a first transmission time interval TTI, and retransmit the CB #1 within a second TTI, wherein a first part of the CBs is received by the terminal device within the first TTI and comprises the CB #0, the CB #2, and the CB #3, and a second part of the CBs is received by the terminal device within the second TTI and comprises the CB #1; and
a receiving unit (420), configured to: if the sending unit, within the second TTI, sends the second part of the CBs to the terminal device (300), and does not send the first part of the CBs to the terminal device (300), receive first feedback information and second feedback information that are sent by the terminal device (300), wherein the first feedback information is used to feed back whether the terminal device (300) correctly decodes the first part of the CBs, the second feedback information is used to feed back whether the terminal device (300) correctly decodes the second part of the CBs, and the second TTI is after the first TTI in a time sequence
wherein a second indication bit is used to indicate whether the CB #1 received within the second TTI is correctly decoded,
wherein the first TTI is a TTI n and the second TTI is a TTI n+1;
wherein the receiving unit (420) is specifically configured to receive, within a TTI n+5, the first feedback information that is sent by the terminal device (300) and receive, within a TTI n+5, the second feedback information that is sent by the terminal device (300),
wherein a first indication bit is used to indicate whether the CB #0, the CB #2, and the CB #3 that are received within the TTI n are correctly decoded.

8. The access network device according to claim 7, wherein the access network device (400) is configured to, simultaneously with receiving feedback, within the TTI n+5, both whether a CB #0, a CB #2, and a CB #3 that are received within the TTI n are correctly decoded and whether a CB #1 received within the TTI n+1 is correctly decoded, receive feed-back, from the terminal device (300) within the TTI n+5, whether the entire TB can be correctly decoded based on the CB #0, the CB #1, the CB #2, and the CB #3 that are received within the TTI n and the TTI n+1.

## Patentansprüche

1. Verfahren (100, 200) zum Senden von Rückmeldeinformationen, wobei das Verfahren Folgendes umfasst:
Empfangen (110, 210), durch eine Endgerätevorrichtung, eines Transportblocks, TB, der durch eine Zugangsnetzvorrichtung gesendet wird, wobei die Zugangsnetzvorrichtung den TB, der einen CB #0, einen CB #1, einen CB #2 und einen CB #3 beinhaltet, innerhalb eines TTI n an die Endgerätevorrichtung sendet und den CB #1 innerhalb eines anderen TTI erneut überträgt, wobei ein erster Teil der CBs innerhalb des TTI n empfangen wird und den CB #0, den CB #2 und den CB #3 umfasst, und ein zweiter Teil der CBs in dem anderen TTI empfangen wird und den erneut übertragenen CB #1 umfasst; und,
wenn die Endgerätevorrichtung innerhalb des anderen TTI den zweiten Teil der CBs, die durch die Zugangsnetzvorrichtung gesendet werden, empfängt und den ersten Teil der CBs nicht empfängt, Senden (120, 220), durch die Endgerätevorrichtung, von ersten Rückmeldeinformationen und zweiten Rückmeldeinformationen an die Zugangsnetzvorrichtung, wobei die ersten Rückmeldeinformationen dazu verwendet werden, rückzumelden, ob die Endgerätevorrichtung den ersten Teil der CBs korrekt decodiert, und die zweiten Rückmeldeinformation dazu verwendet werden, rückzumelden, ob die Endgerätevorrichtung den zweiten Teil der CBs korrekt decodiert, und das andere TTI in einer Zeitsequenz nach dem TTI n liegt,
wobei ein zweites Anzeigebit dazu verwendet wird, anzuzeigen, ob der innerhalb des anderen TTI empfangene CB #1 korrekt decodiert wird, wobei
das andere TTI ein TTI n+1 ist;
wobei die Endgerätevorrichtung die ersten Rückmeldeinformationen innerhalb eines TTI n+5 an die Zugangsnetzvorrichtung sendet und die zweiten Rückmeldeinformationen innerhalb des TTI n+5 an die Zugangsnetzvorrichtung sendet, wobei ein erstes Anzeigebit dazu verwendet wird, anzuzeigen, ob der CB #0, der CB #2 und der CB #3, die innerhalb des TTI n empfangen werden, korrekt decodiert werden.

2. Verfahren nach Anspruch 1, wobei die Endgerätevorrichtung gleichzeitig mit dem Rückmelden innerhalb des TTI n+5 sowohl, ob ein CB #0, ein CB #2 und ein CB #3, die innerhalb des TTI n empfangen werden, korrekt decodiert werden, als auch, ob ein CB #1, der innerhalb des TTI n+1 empfangen wird, korrekt decodiert wird, an die Zugangsnetzvorrichtung innerhalb des TTI n+5 rückmeldet, ob der gesamte TB basierend auf dem CB #0, dem CB #1, dem CB #2 und dem CB #3, die innerhalb des TTI n und des TTI n+1 empfangen werden, korrekt decodiert werden kann.

3. Verfahren zum Empfangen von Rückmeldeinformationen, wobei das Verfahren Folgendes umfasst:
Senden, durch eine Zugangsnetzvorrichtung, eines Transportblocks, TB, der einen CB #0, einen CB #1, einen CB #2 und einen CB #3 beinhaltet, an eine Endgerätevorrichtung innerhalb eines ersten Übertragungszeitintervalls, TTI, und erneutes Übertragen des CB #1 innerhalb eines zweiten TTI, wobei ein erster Teil der CBs durch die Endgerätevorrichtung innerhalb des ersten TTI empfangen wird und den CB #0, den CB #2 und den CB #3 umfasst und ein zweiter Teil der CBs durch die Endgerätevorrichtung innerhalb des zweiten TTI empfangen wird und den CB #1 umfasst; und,
wenn die Zugangsnetzvorrichtung innerhalb des zweiten TTI den zweiten Teil der CBs an die Endgerätevorrichtung sendet und den ersten Teil der CBs nicht an die Endgerätevorrichtung sendet, Empfangen, durch die Zugangsnetzvorrichtung, von ersten Rückmeldeinformationen und zweiten Rückmeldeinformationen, die durch die Endgerätevorrichtung gesendet werden, wobei die ersten Rückmeldeinformationen dazu verwendet werden, rückzumelden, ob die Endgerätevorrichtung den ersten Teil der CBs korrekt decodiert, und die zweiten Rückmeldeinformation dazu verwendet werden, rückzumelden, ob die Endgerätevorrichtung den zweiten Teil der CBs korrekt decodiert, und das zweite TTI in einer Zeitsequenz nach dem ersten TTI liegt,
wobei ein zweites Anzeigebit dazu verwendet wird, anzuzeigen, ob der CB #1, der innerhalb des anderen TTI empfangen wird, korrekt decodiert wird,
wobei das erste TTI ein TTI n und das zweite TTI ein TTI n+1 ist;
wobei das Empfangen, durch die Zugangsnetzvorrichtung, von ersten Rückmeldeinformationen und zweiten Rückmeldeinformationen, die durch die Endgerätevorrichtung gesendet werden, Folgendes umfasst:
Empfangen, durch die Zugangsnetzvorrichtung innerhalb eines TTI n+5, der ersten Rückmeldeinformationen, die durch die Endgerätevorrichtung gesendet werden, und Empfangen, durch die Zugangsnetzvorrichtung innerhalb des TTI n+5, der zweiten Rückmeldeinformationen, die durch die Endgerätevorrichtung gesendet werden, wobei ein erstes Anzeigebit dazu verwendet wird, anzuzeigen, ob der CB #0, der CB #2 und der CB #3, die innerhalb des TTI n empfangen werden, korrekt decodiert werden.

4. Verfahren nach Anspruch 3, wobei die Zugangsnetzvorrichtung gleichzeitig mit dem Empfangen einer Rückmeldung, die sowohl anzeigt, ob ein CB #0, ein CB #2 und ein CB #3, die innerhalb des TTI n empfangen werden, korrekt decodiert werden, als auch, ob ein CB #1, der innerhalb des TTI n+1 empfangen wird, korrekt decodiert wird, innerhalb des TTI n+5 von der Endgerätevorrichtung eine Rückmeldung, ob der gesamte TB basierend auf dem CB #0, dem CB #1, dem CB #2 und dem CB #3, die innerhalb des TTI n und des TTI n+1 empfangen werden, korrekt decodiert werden kann, empfängt.

5. Endgerätevorrichtung (300), umfassend:
eine Empfangseinheit (310), die dazu konfiguriert ist, einen Transportblock, TB, der durch eine Zugangsnetzvorrichtung (400) gesendet wird, zu empfangen, wobei die Zugangsnetzvorrichtung (400) den TB, der einen CB #0, einen CB #1, einen CB #2 und einen CB #3 beinhaltet, innerhalb eines TTI n an die Endgerätevorrichtung (300) sendet und den CB #1 innerhalb eines anderen TTI erneut überträgt, wobei ein erster Teil der CBs innerhalb des TTI n empfangen wird und den CB #0, den CB #2 und den CB #3 umfasst, und ein zweiter Teil der CBs innerhalb des anderen TTI empfangen wird und den CB #1 umfasst; und,
eine Sendeeinheit (320), die zu Folgendem konfiguriert ist: wenn die Empfangseinheit (310) innerhalb des anderen TTI den zweiten Teil der CBs, die durch die Zugangsnetzvorrichtung (400) gesendet werden, empfängt und den ersten Teil der CBs nicht empfängt, Senden von ersten Rückmeldeinformationen und zweiten Rückmeldeinformationen an die Zugangsnetzvorrichtung (400), wobei die ersten Rückmeldeinformationen dazu verwendet werden, rückzumelden, ob die Endgerätevorrichtung (300) den ersten Teil der CBs korrekt decodiert, und die zweiten Rückmeldeinformation dazu verwendet werden, rückzumelden, ob die Endgerätevorrichtung (300) den zweiten Teil der CBs korrekt decodiert, und das andere TTI in einer Zeitsequenz nach dem TTI n liegt,
wobei ein zweites Anzeigebit dazu verwendet wird, anzuzeigen, ob der CB #1, der innerhalb des anderen TTI empfangen wird, korrekt decodiert wird,
wobei das andere TTI ein TTI n+1 ist;
wobei die Sendeeinheit (320) speziell dazu konfiguriert ist, die ersten Rückmeldeinformationen innerhalb eines TTI n+5 an die Zugangsnetzvorrichtung (400) zu senden und die zweiten Rückmeldeinformationen innerhalb des TTI n+5 an die Zugangsnetzvorrichtung (400) zu senden,
wobei ein erstes Anzeigebit dazu verwendet wird, anzuzeigen, ob der CB #0, der CB #2 und der CB #3, die innerhalb des TTI n empfangen werden, korrekt decodiert werden.

6. Endgerätevorrichtung nach Anspruch 5, wobei die Endgerätevorrichtung (300) gleichzeitig mit dem Rückmelden innerhalb des TTI n+5 sowohl, ob ein CB #0, ein CB #2 und ein CB #3, die innerhalb des TTI n empfangen werden, korrekt decodiert werden, als auch, ob ein CB #1, der innerhalb des TTI n+1 empfangen wird, korrekt decodiert wird, dazu konfiguriert ist, gleichzeitig mit dem Rückmelden innerhalb des TTI n+5 sowohl, ob ein CB #0, ein CB #2 und ein CB #3, die innerhalb des TTI n empfangen werden, korrekt decodiert werden, als auch, ob ein CB #1, der innerhalb des TTI n+1 empfangen wird, korrekt decodiert wird, an die Zugangsnetzvorrichtung (400) innerhalb des TTI n+5 rückzumelden,, ob der gesamte TB basierend auf dem CB #0, dem CB #1, dem CB #2 und dem CB #3, die innerhalb des TTI n und des TTI n+1 empfangen werden, korrekt decodiert werden kann.

7. Zugangsnetzvorrichtung (400), umfassend:
eine Sendeeinheit (410), die dazu konfiguriert ist, einen Transportblock, TB, der einen CB #0, einen CB #1, einen CB #2 und einen CB #3 beinhaltet, an eine Endgerätevorrichtung (300) innerhalb eines ersten Übertragungszeitintervalls, TTI, zu senden und den CB #1 innerhalb eines zweiten TTI erneut zu übertragen, wobei ein erster Teil der CBs durch die Endgerätevorrichtung innerhalb des ersten TTI empfangen wird und den CB #0, den CB #2 und den CB #3 umfasst, und ein zweiter Teil der CBs, die durch die Endgerätevorrichtung innerhalb des zweiten TTI empfangen wird und den CB #1 umfasst; und
eine Empfangseinheit (420), die zu Folgendem konfiguriert ist: wenn die Sendeeinheit innerhalb des zweiten TTI den zweiten Teil der CBs an die Endgerätevorrichtung (300) sendet und den ersten Teil der CBs nicht an die Endgerätevorrichtung (300) sendet, Empfangen von ersten Rückmeldeinformationen und zweiten Rückmeldeinformationen, die durch die Endgerätevorrichtung (300) gesendet werden, wobei die ersten Rückmeldeinformationen dazu verwendet werden, rückzumelden, ob die Endgerätevorrichtung (300) den ersten Teil der CBs korrekt decodiert, und die zweiten Rückmeldeinformationen dazu verwendet werden, rückzumelden, ob die Endgerätevorrichtung (300) den zweiten Teil der CBs korrekt decodiert, und das zweite TTI in einer Zeitsequenz nach dem ersten TTI liegt,
wobei ein zweites Anzeigebit dazu verwendet wird, anzuzeigen, ob der CB #1, der innerhalb des zweiten TTI empfangen wird, korrekt decodiert wird,
wobei das erste TTI ein TTI n und das zweite TTI ein TTI n+1 ist;
wobei die Empfangseinheit (420) speziell dazu konfiguriert ist, innerhalb eines TTI n+5 die ersten Rückmeldeinformationen, die durch die Endgerätevorrichtung (300) gesendet werden, zu empfangen, und innerhalb eines TTI n+5 die zweiten Rückmeldeinformationen, die durch die Endgerätevorrichtung (300) gesendet werden, zu empfangen,
wobei ein erstes Anzeigebit dazu verwendet wird, anzuzeigen, ob der CB #0, der CB #2 und der CB #3, die innerhalb des TTI n empfangen werden, korrekt decodiert werden.

8. Zugangsnetzvorrichtung nach Anspruch 7, wobei die Zugangsnetzvorrichtung (400) dazu konfiguriert ist, gleichzeitig mit dem Empfangen einer Rückmeldung innerhalb des TTI n+5 sowohl, ob ein CB #0, ein CB #2 und ein CB #3, die innerhalb des TTI n empfangen werden, korrekt decodiert werden, als auch, ob ein CB #1, der innerhalb des TTI n+1 empfangen wird, korrekt decodiert wird, eine Rückmeldung von der Endgerätevorrichtung (300) innerhalb des TTI n+5, ob der gesamte TB basierend auf dem CB #0, dem CB #1, dem CB #2 und dem CB #3, die innerhalb des TTI n und des TTI n+1 empfangen werden, korrekt decodiert werden kann, zu empfangen.

## Revendications

1. Procédé d'envoi d'informations de rétroaction (100, 200), dans lequel le procédé comprend
la réception (110, 210), par un dispositif terminal, d'un bloc de transport TB envoyé par un dispositif de réseau d'accès, dans lequel le dispositif de réseau d'accès envoie le TB comportant un CB #0, un CB #1, un CB #2 et un CB #3 au dispositif terminal dans un TTI n, et retransmet le CB #1 dans un autre TTI, dans lequel une première partie des CB est reçue dans le TTI n et comprend le CB #0, le CB #2 et le CB #3, et une seconde partie des CB est reçue dans l'autre TTI et comprend le CB #1 retransmis ; et
si le dispositif terminal, dans l'autre TTI, reçoit la seconde partie des CB envoyés par le dispositif de réseau d'accès, et ne reçoit pas la première partie des CB, l'envoi (120, 220), par le dispositif terminal, des premières informations de rétroaction et des secondes informations de rétroaction au dispositif de réseau d'accès, dans lequel les premières informations de rétroaction sont utilisées pour faire une rétroaction sur si le dispositif terminal décode correctement la première partie des CB, les secondes informations de rétroaction sont utilisées pour faire une rétroaction sur si le dispositif terminal décode correctement la seconde partie des CB, et l'autre TTI suit le TTI n dans une séquence temporelle, dans lequel un second bit d'indication est utilisé pour indiquer si le CB #1 reçu dans l'autre TTI est correctement décodé, dans lequel
l'autre TTI est un TTI n+1 ;
dans lequel le dispositif terminal envoie les premières informations de rétroaction au dispositif de réseau d'accès dans un TTI n+5 et envoie les secondes informations de rétroaction au dispositif de réseau d'accès dans le TTI n+5, dans lequel un premier bit d'indication est utilisé pour indiquer si le CB #0, le CB #2 et le CB #3 reçus dans le TTI n sont correctement décodés.

2. Procédé selon la revendication 1, dans lequel, simultanément à la rétroaction, dans le TTI n+5, indiquant si un CB #0, un CB #2 et un CB #3 reçus dans le TTI n sont correctement décodés et si un CB #1 reçu dans le TTI n+1 est correctement décodé, le dispositif terminal fait une rétroaction, au dispositif de réseau d'accès dans le TTI n+5, sur si l'ensemble du TB peut être correctement décodé sur la base du CB #0, du CB #1, du CB #2 et du CB #3 reçus dans le TTI n et le TTI n+1.

3. Procédé de réception d'informations de rétroaction, dans lequel le procédé comprend :
l'envoi, par un dispositif de réseau d'accès, d'un bloc de transport TB comportant un CB #0, un CB #1, un CB #2 et un CB #3 à un dispositif terminal dans un premier intervalle de temps de transmission TTI, et la retransmission du CB #1 dans un second TTI, dans lequel une première partie des CB est reçue par le dispositif terminal dans le premier TTI et comprend le CB #0, le CB #2 et le CB #3, et une seconde partie des CB est reçue par le dispositif terminal dans le second TTI et comprend le CB #1 ; et
si le dispositif de réseau d'accès, dans le second TTI, envoie la seconde partie des CB au dispositif terminal, et n'envoie pas la première partie des CB au dispositif terminal, la réception, par le dispositif de réseau d'accès, des premières informations de rétroaction et des secondes informations de rétroaction envoyées par le dispositif terminal, dans lequel les premières informations de rétroaction sont utilisées pour faire une rétroaction sur si le dispositif terminal décode correctement la première partie des CB, les secondes informations de rétroaction sont utilisées pour faire une rétroaction sur si le dispositif terminal décode correctement la seconde partie des CB, et le second TTI suit le premier TTI dans une séquence temporelle,
dans lequel un second bit d'indication est utilisé pour indiquer si le CB #1 reçu dans l'autre TTI est correctement décodé,
dans lequel le premier TTI est un TTI n et le second TTI est un TTI n+1 ;
dans lequel la réception, par le dispositif de réseau d'accès, des premières informations de rétroaction et des secondes informations de rétroaction envoyées par le dispositif terminal comprend :
la réception, par le dispositif de réseau d'accès dans le TTI n+5, des premières informations de rétroaction envoyées par le dispositif terminal et la réception, par le dispositif de réseau d'accès dans le TTI n+5, des secondes informations de rétroaction envoyées par le dispositif terminal, dans lequel un premier bit d'indication est utilisé pour indiquer si le CB #0, le CB #2 et le CB #3 reçus dans le TTI n sont correctement décodés.

4. Procédé selon la revendication 3, dans lequel, simultanément à la réception de la rétroaction indiquant à la fois si un CB #0, un CB #2 et un CB #3 reçus dans le TTI n sont correctement décodés et si un CB #1 reçu dans le TTI n+1 est correctement décodé, le dispositif de réseau d'accès reçoit la rétroaction, à partir du dispositif terminal dans le TTI n+5, sur si l'ensemble du TB peut être correctement décodé sur la base du CB #0, du CB #1, du CB #2 et du CB #3 reçus dans le TTI n et le TTI n+1.

5. Dispositif terminal (300), comprenant :
une unité de réception (310), configurée pour recevoir un bloc de transport TB envoyé par un dispositif de réseau d'accès (400), dans lequel le dispositif de réseau d'accès (400) envoie le TB comportant un CB #0, un CB #1, un CB #2 et un CB #3 au dispositif terminal (300) dans un TTI n, et retransmet le CB #1 dans un autre TTI, dans lequel une première partie des CB est reçue dans le TTI n et comprend le CB #0, le CB #2 et le CB #3, et une seconde partie des CB est reçue dans l'autre TTI et comprend le CB #1 ; et
une unité d'envoi (320), configurée pour : si l'unité de réception (310), dans l'autre TTI, reçoit la seconde partie des CB envoyés par le dispositif de réseau d'accès (400), et ne reçoit pas la première partie des CB, envoyer les premières informations de rétroaction et les secondes informations de rétroaction au dispositif de réseau d'accès (400), dans lequel les premières informations de rétroaction sont utilisées pour faire une rétroaction sur si le dispositif terminal (300) décode correctement la première partie des CB, les secondes informations de rétroaction sont utilisées pour faire une rétroaction sur si le dispositif terminal (300) décode correctement la seconde partie des CB, et l'autre TTI suit le TTI n dans une séquence temporelle,
dans lequel un second bit d'indication est utilisé pour indiquer si le CB #1 reçu dans l'autre TTI est correctement décodé,
dans lequel l'autre TTI est un TTI n+1 ;
dans lequel l'unité d'envoi (320) est spécifiquement configurée pour envoyer les premières informations de rétroaction au dispositif de réseau d'accès (400) dans un TTI n+5, et envoyer les secondes informations de rétroaction au dispositif de réseau d'accès (400) dans le TTI n+5,
dans lequel un premier bit d'indication est utilisé pour indiquer si le CB #0, le CB #2 et le CB #3 reçus dans le TTI n sont correctement décodés.

6. Dispositif terminal selon la revendication 5, dans lequel, simultanément à la rétroaction, dans le TTI n+5, à la fois sur si un CB #0, un CB #2 et un CB #3 reçus dans le TTI n sont correctement décodés et si un CB #1 reçu dans le TTI n+1 est correctement décodé, le dispositif terminal (300) est configuré pour, simultanément à la rétroaction, dans le TTI n+5, à la fois sur si un CB #0, un CB #2 et un CB #3 reçus dans le TTI n sont correctement décodés et si un CB #1 reçu dans le TTI n+1 est correctement décodé, faire la rétroaction, au dispositif de réseau d'accès (400) dans le TTI n+5, sur si l'ensemble du TB peut être correctement décodé sur la base du CB #0, du CB #1, du CB #2 et du CB #3 reçus dans le TTI n et le TTI n+1.

7. Dispositif de réseau d'accès (400), comprenant :
une unité d'envoi (410), configurée pour envoyer un bloc de transport TB comportant un CB #0, un CB #1, un CB #2 et un CB #3 à un dispositif terminal (300) dans un premier intervalle temporel de transmission TTI, et retransmettre le CB #1 dans un second TTI, dans lequel une première partie des CB est reçue par le dispositif terminal dans le premier TTI et comprend le CB #0, le CB #2 et le CB #3, et une seconde partie des CB est reçue par le dispositif terminal dans le second TTI et comprend le CB #1 ; et
une unité de réception (420), configurée pour : si l'unité d'envoi, dans le second TTI, envoie la seconde partie des CB au dispositif terminal (300), et n'envoie pas la première partie des CB au dispositif terminal (300), recevoir les premières informations de rétroaction et les secondes informations de rétroaction envoyées par le dispositif terminal (300), dans lequel les premières informations de rétroaction sont utilisées pour faire une rétroaction sur si le dispositif terminal (300) décode correctement la première partie des CB, les secondes informations de rétroaction sont utilisées pour faire une rétroaction sur si le dispositif terminal (300) décode correctement la seconde partie des CB, et le second TTI suit le premier TTI dans une séquence temporelle
dans lequel un second bit d'indication est utilisé pour indiquer si le CB #1 reçu dans le second TTI est correctement décodé,
dans lequel le premier TTI est un TTI n et le second TTI est un TTI n+1 ;
dans lequel l'unité de réception (420) est spécifiquement configurée pour recevoir, dans un TTI n+5, les premières informations de rétroaction envoyées par le dispositif terminal (300) et recevoir, dans un TTI n+5, les secondes informations de rétroaction envoyées par le dispositif terminal (300),
dans lequel un premier bit d'indication est utilisé pour indiquer si le CB #0, le CB #2 et le CB #3 reçus dans le TTI n sont correctement décodés.

8. Dispositif de réseau d'accès selon la revendication 7, dans lequel le dispositif de réseau d'accès (400) est configuré pour, simultanément à la réception d'une rétroaction, dans le TTI n+5, à la fois si un CB #0, un CB #2 et un CB #3 reçus dans le TTI n sont correctement décodés et si un CB #1 reçu dans le TTI n+1 est correctement décodé, recevoir une rétroaction, à partir du dispositif terminal (300) dans le TTI n+5, si l'ensemble du TB peut être correctement décodé sur la base du CB #0, du CB #1, du CB #2 et du CB #3 reçus dans le TTI n et le TTI n+1.
